(19) Europäisches Patentamt
European Patent Office
Office européen des brevets

(11) **EP 4 541 775 A1**

(12) **EUROPEAN PATENT APPLICATION**

(43) Date of publication:
**23.04.2025 Bulletin 2025/17**

(21) Application number: **23383071.0**

(22) Date of filing: **19.10.2023**

(51) International Patent Classification (IPC):
**C02F 3/06** (2023.01)    **C02F 3/10** (2023.01)
**C02F 1/44** (2023.01)

(52) Cooperative Patent Classification (CPC):
**C02F 3/06; C02F 3/108;** C02F 1/441; C02F 3/104;
C02F 2303/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **DDP Specialty Electronic Materials US,
LLC
Wilmington, DE 19805 (US)**

(72) Inventors:
• **SLAGT, Marcus**
  **4542 Hoek (NL)**
• **GILABERT ORIOL, Guillem**
  **340 Tarragona (ES)**
• **MASSONS, Gerard**
  **340 Tarragona (ES)**

(74) Representative: **Houghton, Mark Phillip
Patent Outsourcing Limited
1 King Street
Bakewell, Derbyshire DE45 1DZ (GB)**

(54) **METHOD FOR CHEMICAL TREATMENT OF RESIN BED**

(57)    Provided is a method of chemically treating resin beads in a vessel (2),
wherein the vessel is adapted to treat feed water, and comprises
(a) a bed of resin beads comprising a biostratum (1) upstream of a bead stratum (6) in the net direction of feed water flow, wherein the biostratum comprises resin beads and a biomass comprising living microorganisms;
(b) a first port (3) at a first end of the vessel, through which feed water enters the vessel;
(c) a second port (5) at a second end of the vessel, through which bead-treated water leaves the vessel;
(d) the first and second ends are situated at opposing ends of the vessel;
(e) at least one intermediate conduit (11) located within the bed, for conveying an aqueous chemical into the bed and/or from the bed; and

wherein the bead-treated water is passed through an apparatus that performs a reverse osmosis process on the bead-treated water; and
wherein the method of chemically treating the resin beads comprises chemically treating a partial section of the resin bead bed with an aqueous chemical, the partial section having a volume which is less than 100% of the volume of the resin bead bed and being located upstream or downstream of an intermediate conduit in the net direction of feed water flow, and wherein the aqueous chemical is conveyed to the partial section of the bed and/or is conveyed from the partial section of the bed through the intermediate conduit.

Fig. 1

**Description**

The invention relates to a method for chemical treatment of a resin bed, and which may particularly be used to treat a resin bed used in a method of treating feed water as described in WO 2019/212720 or WO 2022/203760.

WO 2019/212720 and WO 2022/203760 describe an improved method of water purification comprising a pretreatment of feed water prior to treatment using a reverse osmosis (RO) membrane. A common difficulty with water purification processes using reverse osmosis membranes is biofouling, a phenomenon in which bacteria growth creates a biofilm on the membrane. Biofouling reduces the membrane permeability and generates a larger than desirable pressure drop across the membrane, which can also eventually mechanically compromise the integrity of the element in which the reverse osmosis membrane is housed. Biofilm cannot be completely removed from a reverse osmosis membrane in an industrial scale system, even using harsh cleaning conditions. This ultimately results in reduced membrane lifetime.

The method of pretreatment of impure feed water disclosed in WO 2019/212720 comprises *inter alia* the step of passing the feed water through a vessel comprising a bed of resin beads. The bed of resin beads comprises a biostratum, which is a layer of resin beads on which a biomass comprising living microorganisms grows. Characteristics of the method, including the use of resin beads and specified water flow, enable establishment and growth of the biomass and biostratum. Preferably, after feed water passes through the biostratum, it immediately reaches a bead stratum region within the same vessel. Water which has passed through the biostratum is referred to as biostratum-treated water and water which has passed through the biostratum and the bead stratum is referred to as bead-treated water. The bead-treated water is preferably conveyed to an apparatus that performs an RO process on the bead-treated water. When such pretreated water is passed through an RO membrane, there is a reduced incidence of biofouling of the RO membrane. Microorganism growth on the resin beads used for pretreatment is relatively easily removed by backwashing.

WO 2019/212720 discloses that a backwashing process is preferably performed to remove from the resin beads microorganisms and any excess extracellular polymeric substances (EPS) created by the microorganisms after the treatment method has been performed for some time such that the biostratum has grown undesirably large. The backwashing process includes a process in which a backwash solution (either water or an appropriate aqueous solution) is forced under pressure through the vessel in "upflow", the direction opposite to the net direction taken by the feed water. That is, the backwash solution passes through the bead stratum, then passes through the biostratum, and then exits the vessel through the feed water inlet. The backwash is a physical process: the upflow pressure of the backwash solution disturbs the entire resin bed (i.e., biostratum and bead stratum) and microorganisms and EPS are removed by friction of water passing over the surface of the resin beads and by friction of the resin beads rubbing against each other.

WO 2022/203760 discloses *inter alia* a method based on that of WO 2019/212720, wherein the vessel additionally comprises an intermediate distributor through which air, water, an appropriate aqueous solution or a combination thereof are injected to enable the biostratum to be backwashed without disturbing the entire bead stratum.

WO 2019/212720 and WO 2022/203760 do not disclose any chemical treatment of the resin beads in the vessel, and further do not disclose any means for chemical treatment of a partial section of the resin bead bed. Further, the backwashing processes in WO 2019/212720 and WO 2022/203760 are fully intended to disturb the biostratum, and to remove excess biomass.

Chemical treatment is a process in which the beads are chemically treated, including being chemically cleaned and/or regenerated. It is not the same as the backwash process. Periodic backwashing is necessary to remove an excessively thick biostratum layer for continued operation of the method of treatment of feed water. The backwash process is a physical process which disturbs the entire bed, wherein microorganisms and any EPS in voids between the resin beads are removed by friction of water passing over the surface of the resin beads and by friction of the resin beads rubbing against each other. Chemical treatment targets cleaning the media and its surface, and includes, for example, chemical removal of contaminants, and to regenerate beads, for example to regenerate HFO-containing beads to restore their phosphate capacity.

The present invention provides a method of chemically treating resin beads in a vessel,

wherein the vessel is adapted to treat feed water, and comprises

(a) a bed of resin beads comprising a biostratum upstream of a bead stratum in the net direction of feed water flow, wherein the biostratum comprises resin beads and a biomass comprising living microorganisms;
(b) a first port at a first end of the vessel, through which feed water enters the vessel;
(c) a second port at a second end of the vessel, through which bead-treated water leaves the vessel;
(d) the first and second ends are situated at opposing ends of the vessel;
(e) at least one intermediate conduit located within the bed, for conveying an aqueous chemical into the bed and/or from the bed; and

wherein the bead-treated water is passed through an apparatus that performs a reverse osmosis process on the bead-treated water; and

wherein the method of chemically treating the resin beads comprises chemically treating a partial section of the resin bead bed with an aqueous chemical, the partial section having a volume which is less than 100% of the volume of the resin bead bed and being located upstream or downstream of an intermediate conduit in the net direction of feed water flow, and wherein the aqueous chemical is conveyed to the partial section of the bed and/or is conveyed from the partial section of the bed through the intermediate conduit.

Preferably, the method of treating feed treat water has the following parameters:

(a) the area-normalized free void volume (ANFVV) in the biostratum is $0.018 \, m^3/m^2$ or less, wherein ANFVV is the total free void volume divided by the area of the cross section of the biostratum;
(b) the packing density in the biostratum is 0.68 to 0.98;
(c) the ratio of the exterior surface area of the resin beads to the total free void volume in the biostratum is 2.0 to 50 $m^2/L$;
(d) the flow rate of feed water through the biostratum is 100 to 1,000 biostratum volumes per hour; and
(e) the Reynolds number of the feed water flow through the biostratum is 0.10 to 3.0.

Each intermediate conduit is adapted to convey, or deliver, an aqueous chemical into the bed and/or to convey, or collect, an aqueous chemical from the bed. Each intermediate conduit may be adapted to have single functionality (it may deliver an aqueous chemical into the bed, or it may collect an aqueous chemical from the bed), or may have dual functionality (such that it is capable of delivering an aqueous chemical to the bed and capable of collecting an aqueous chemical from the bed). Where multiple intermediate conduits are present, they may be configured similarly or differently to each other. The terms "intermediate distributor" and "intermediate collector" are occasionally used herein to specify the function of a conduit in a particular arrangement.

Preferably, the, or at least one, intermediate conduit collects an aqueous chemical from the bed.

Each intermediate conduit is preferably located in the bead stratum, such that, when one intermediate conduit is present, the partial section of resin bed located upstream of the intermediate conduit in the net direction of feed water flow comprises the biostratum, and the partial section of resin bed located downstream of the intermediate conduit in the net direction of feed water flow is the bead stratum or is a partial section of the bead stratum. When multiple intermediate conduits are present, preferably they are all located in the bead stratum, the partial section of the resin bed located upstream of the first intermediate conduit in the net direction of feed water flow comprises the biostratum, and the second and any subsequent intermediate conduits are located downstream of the first intermediate conduit in the net direction of feed water flow, in the bead stratum.

The intermediate conduit(s) comprise openings which enable the conduit(s) to deliver an aqueous chemical treatment to the bed or to collect an aqueous chemical from the bed. The intermediate conduit(s) may achieve chemical treatment of a partial section of the resin bed (and not the entire resin bed) by various means.

For example, the intermediate conduit(s) may comprise openings on one side only, to provide directional flow such that delivery of aqueous chemical treatment to the bed, or collection of aqueous chemical treatment from the bed, takes place at the side of the conduit where the openings are situated.

Preferably, when a first partial section of the resin bed is being treated (which may be upstream or downstream of any intermediate conduit in the net direction of feed water flow), provision of an opposing force, or positive pressure, in a second partial section of the resin bed on the opposite side of the intermediate conduit is used to prevent flow of aqueous chemical treatment from the first partial section of the resin bed into the second partial section of the resin bed. As a force per unit area is a pressure, this opposing force, in the vessel, can also be considered as a pressure.

Preferably, such opposing force is provided by a stream of "block water". Block water is water, for example, tap water or bead-treated water, which does not adversely affect the downstream reverse osmosis apparatus. The block water is introduced into a second partial section of the resin bed, to prevent flow of an aqueous chemical treatment from a first partial section of the resin bed into the second partial section of the resin bed, the first and second partial sections of the resin bed being on opposite sides of an intermediate conduit located between them. Block water may be introduced into the vessel through the first port, the second port, or an intermediate conduit, and discharged from the same outlet of the vessel as the chemical treatment stream. A block water stream introduced into a second partial section of the resin bed may have the same net direction of flow, or an opposing net direction of flow, to the direction of flow of aqueous chemical treatment through a first partial section of the bed, depending on the relative locations of the partial sections of the bed, the net direction of flow of the feed water, and the net direction of flow of the aqueous chemical stream.

Block water has a lower linear velocity than that of the chemical treatment stream. Preferably, the block water stream has a linear velocity of 0.1% or greater, more preferably 0.2% or greater, of the linear velocity of the chemical treatment stream. Preferably, depending on the partial section being treated, and the direction of chemical treatment flow, the block water stream has a linear velocity of no more than 90%, preferably no more than 50%, more preferably no more than 10%, still more preferably no more than 5%, and most preferably no more than 2.5% of the linear velocity of the chemical treatment stream.

Preferably, the linear velocity of the chemical treatment stream is 0.1 m/h or greater, more preferably 0.5 m/h or greater, still more preferably 2 m/h or greater. Preferably, the linear velocity of the chemical treatment stream is no more than 14 m/h, more preferably no more than 10 m/h, still more preferably no more than 6 m/h. Preferably, the linear velocity of the chemical treatment stream is from 0.1 m/h to 14 m/h, more preferably from 0.1 to 10 m/h, most preferably 2 m/h to 6 m/h.

Preferably, the amount of chemical treatment flowing through the partial section of the resin bed which is being treated is at least 1, preferably at least 5, times the volume of the partial section being treated. Preferably, the amount of chemical treatment flowing through the partial section of the resin bed which is being treated is no more than 15, more preferably no more than 10, times the volume of the partial section being treated. Preferably, the amount of chemical treatment flowing through the partial section being treated is from 1 to 15; preferably 5 to 10, times the volume of the partial section of the resin bed which is being treated when the partial section being treated is downstream of an intermediate conduit (preferably, the bead stratum or a partial section thereof), and preferably 1 to 4 times the volume of the partial section of the resin bed which is being treated when the partial section being treated is upstream of an intermediate conduit (preferably comprising the biostratum). Volumes of partial sections are calculated using the equations:

$$\mathrm{Av} \qquad = \text{area of the cross section of the interior volume of the vessel} \qquad (\mathrm{m}^2)$$

$$\mathrm{Lps} \qquad = \text{length of the partial section being treated} \qquad (\mathrm{m});$$

$$\mathrm{Vps} \qquad = \text{volume of the partial section being treated} = \mathrm{Av} * \mathrm{Lps} \qquad (\mathrm{m}^3).$$

The amount of chemical treatment is therefore expressed in BV, meaning bead stratum volumes, or biostratum volumes as appropriate.

The claimed method of chemically treating resin beds comprises each of the following preferred configurations A1, A2, B1 and B2, which may be summarized as follows:

- A1 and A2 - chemical treatment of a partial section of the resin bed located downstream of an intermediate conduit located in the bead stratum (i.e., preferably, the bead stratum or a partial section thereof), in upflow or downflow respectively;
- B1 and B2 - chemical treatment of a partial section of the resin bed located upstream of an intermediate conduit located in the bead stratum (i.e., preferably, comprising the biostratum), in upflow or downflow respectively.

(A1) In the A1 configuration, said bead stratum, or a partial section thereof, is treated with an aqueous chemical which is delivered to the bead stratum in a chemical treatment stream, which method comprises the steps of:

i. introducing said bead stratum chemical treatment stream into the vessel through said second port, wherein

(a) the amount of bead stratum chemical treatment flowing through the bead stratum is 1 to 15 bead stratum volumes, preferably 5 to 10 bead stratum volumes; and
(b) the linear velocity of bead stratum chemical treatment stream flowing through the bead stratum is 0.1 to 14 m/h, preferably 2 to 6 m/h; and

ii. introducing a block water stream into the vessel through said first port, wherein the block water stream has a linear velocity of from 0.2 to 50%, preferably 0.2 to 5%, more preferably 0.4 to 2.5%, of the linear velocity of the bead stratum chemical treatment stream; and
iii. discharging the bead stratum chemical treatment stream and the block water stream from the vessel through said intermediate conduit.

(A2) In the A2 configuration, said bead stratum, or a partial section thereof, is treated with an aqueous chemical which is delivered to the bead stratum in a chemical treatment stream, which method comprises the steps of:

i. introducing said bead stratum chemical treatment stream into the vessel through said intermediate conduit, wherein:

(a) the amount of bead stratum chemical treatment flowing through the bead stratum is 1 to 15 bead stratum volumes, preferably 5 to 10 bead stratum volumes; and
(b) the linear velocity of the bead stratum chemical treatment stream flowing through the bead stratum is 0.1 to 14 m/h, preferably 2 to 6 m/h; and

ii. introducing a block water stream into the vessel through said first port, wherein the block water stream has a linear velocity of from 0.1 to 10%, preferably 0.2 to 4%, more preferably 0.3 to 3%, of the linear velocity of the bead stratum chemical treatment stream; and
iii. discharging the bead stratum chemical treatment stream and the block water stream from the vessel through said second port.

(B1) In the B1 configuration, said biostratum is treated with an aqueous chemical which is delivered to the biostratum in a chemical treatment stream, which method comprises the steps of:

i. introducing said biostratum chemical treatment stream into the vessel through said intermediate conduit, wherein:

(a) the amount of biostratum chemical treatment flowing through the biostratum is 1 to 15 biostratum volumes, preferably 1 to 4 biostratum volumes; and
(b) the linear velocity of the biostratum chemical treatment stream flowing through the biostratum is 0.1 to 10 m/h, preferably 2 to 6 m/h;

ii. introducing a block water stream into the vessel through said second port, wherein the block water stream has a linear velocity of from 0.1 to 10%, preferably 0.1 to 1%, more preferably 0.1 to 0.3%, of the linear velocity of the biostratum chemical treatment stream; and
iii. discharging the chemical treatment stream and the block water stream from the vessel through said first port.

(B2) In the B2 configuration, said biostratum is treated with an aqueous chemical which is delivered to the biostratum in a chemical treatment stream, which method comprises the steps of:

i. introducing said biostratum chemical treatment stream into the vessel through said first port, wherein:

(a) the amount of biostratum chemical treatment flowing through the biostratum is 1 to 15 biostratum volumes, preferably 1 to 4 biostratum volumes; and
(b) the linear velocity of the biostratum chemical treatment stream flowing through the biostratum is 0.1 to 10 m/h, preferably 2 to 6 m/h; and

ii. introducing a block water stream into the vessel through said second port, wherein the block water stream has a linear velocity of from 0.1 to 90%, preferably 0.2 to 4%, more preferably 0.3 to 3%, of the linear velocity of the biostratum chemical treatment stream; and
iii. discharging the biostratum chemical treatment stream and the block water stream from the vessel through said intermediate conduit.

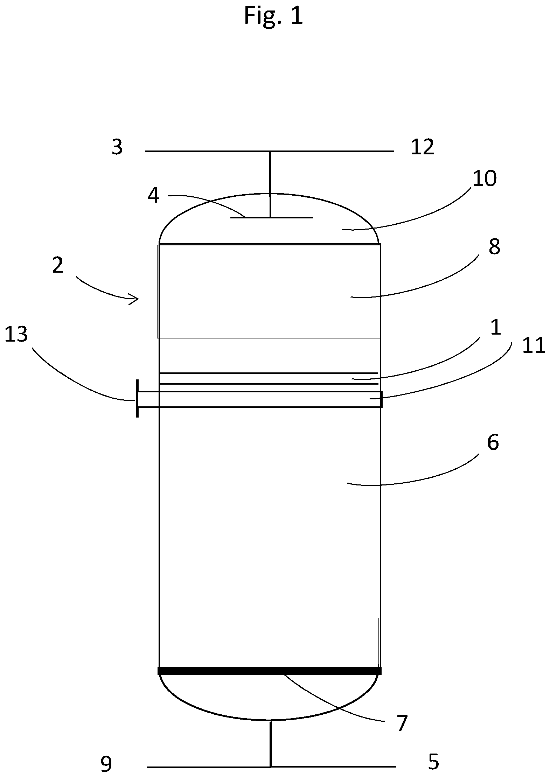

Particularly when voids between the beads in the biostratum are fairly clogged with biomass (i.e., at high packing densities, e.g., at 0.80 or above), even a very small amount of block water (for example, for the B1 configuration, 0.1 to 0.3% of the flow rate of the chemical treatment stream) holds the biostratum down and prevents any upflow of the chemical treatment solution (i) above an intermediate collector when the chemical treatment stream is introduced through the bottom outlet (configuration A1), or (ii) above an intermediate distributor when the chemical treatment stream is introduced through the intermediate distributor and discharged through the bottom outlet (configuration A2). When the voids in the biostratum are fairly open (i.e., at lower packing densities of e.g., below 0.80) then relatively higher levels of block water are required.
In the A1 and B2 configurations, the chemical treatment stream flows in a counter-current direction to the block water, which requires a slightly higher block water flow than for the A2 and B1 configurations (where chemical treatment and block water flow in a co-current direction).
The B2 configuration may have a higher block water flow than the A1 configuration, because in the B2 configuration, block water pushing against the high packing density biostratum has the effect of expanding it, whereas in the A1 configuration, block water pushing against the high packing density biostratum has the effect of contracting it. In addition, where the vessel is vertically oriented, for example as shown in Figure 1 (discussed below), in the B2 configuration the chemical treatment stream flows in the direction of gravity, whilst the flow of the block water stream is against gravity.

In the A2 and B1 configurations, co-current flow of the chemical treatment and block water streams requires a smaller block water flow than the counter-current configurations A1 and B2. However, the volume of chemical stream in the A2 configuration may be larger than in the B1 configuration. This is because, in the B1 configuration the biostratum is being treated and the voids between the beads comprise biomass and comparatively little water, whereas in the A2 configuration, where the bead stratum is being treated, the voids between the beads are almost entirely filled with water, so the A2 configuration requires a comparatively larger volume of chemical for treatment due to dilution.

In general, minimum amounts of chemical treatment and block water are used, to save resources.

Chemical treatment preferably comprises use of an aqueous chemical which is an alkali metal hydroxide having pH > 9, an acid having pH < 5.5, brine or sodium chloride having a concentration of 8-23% wt. in water, a non-oxidizing biocide having <400 mV redox, an oxidant having >400 mV redox, or a combination thereof.

Preferably, at least one intermediate conduit collects an aqueous chemical being discharged from the vessel.

Preferably, the chemical treatment of the present invention does not affect the viability of the biostratum.

The vessel is preferably vertically oriented, such that the first port and first end of the vessel are located at the top of the vessel, the second port and second end of the vessel are located at the bottom of the vessel, and feed water flows downwards through the resin bed from the first port.

The present method of chemical treatment may further comprise extraction and recycling of phosphorous-containing anions, particularly phosphates, from the bead stratum. In such a method, the bead stratum comprises resin beads comprising from 5 to 40%, by weight based on the total weight of the resin beads, of hydrated ferric oxide; the aqueous chemical treatment stream comprises an alkali metal hydroxide having pH > 9 which extracts phosphorous-containing anions from the beads; and the method further comprises recycling phosphorous-containing anions from the chemical treatment stream after it is discharged from the vessel. Preferably, in such a method, at least one intermediate conduit located in the bead stratum collects an aqueous chemical being discharged from the vessel, such as in configuration A1.

The following is a detailed description of the invention.

As used herein, the following terms have the designated definitions, unless the context clearly indicates otherwise.

All percentages are by weight unless otherwise specified.

"Resin" as used herein is a synonym for "polymer." A "polymer," as used herein is a relatively large molecule made up of the reaction products of smaller chemical repeat units known as "monomers".

Vinyl monomers have a non-aromatic carbon-carbon double bond that is capable of participating in a free-radical polymerization process. Vinyl monomers have molecular weights of less than 2,000. Vinyl monomers include, for example, styrene, substituted styrenes, dienes, ethylene, ethylene derivatives, and mixtures thereof. Ethylene derivatives include, for example, unsubstituted and substituted versions of the following: vinyl acetate and acrylic monomers. "Substituted" means having at least one attached chemical group such as, for example, alkyl group, alkenyl group, vinyl group, hydroxyl group, alkoxy group, hydroxyalkyl group, carboxylic acid group, sulfonic acid group, amino group, quaternary ammonium group, other functional groups, and combinations thereof.

The category "acrylic monomers" is the group of monomers selected from acrylic acid; methacrylic acid; substituted or unsubstituted alkyl esters of acrylic acid or methacrylic acid; and acrylonitrile.

Vinyl aromatic monomers include styrene, alkyl styrenes comprising 1 to 4 carbon atoms, and multifunctional vinyl aromatic monomers.

A polymer in which 75% or more of the polymerized units (preferably at least 95%, preferably at least 99%), by weight based on the weight of the polymer, are polymerized units of one or more vinyl monomers, or acrylic monomers, is a vinyl polymer, or an acrylic polymer, respectively. A vinyl aromatic polymer is a polymer in which 50% or more of the polymerized units (preferably at least 80%, preferably at least 90%, preferably at least 95%), by weight based on the weight of the polymer, are polymerized units of one or more vinyl aromatic monomer.

The term "beads" herein refers to discrete particles that are solid over a temperature range that includes the temperature range at which the methods of water treatment and chemical treatment take place, for example 5-45°C, more ideally 15-40°C, and more preferably 19-35°C, at which a biostratum forms rapidly.

In the case of beads, the weight of the polymer is considered to be the dry weight of the bead.

The degree to which a particle is spherical is characterized by the sphericity $\Psi$, which is defined using of the three principal orthogonal axes of the object, a (longest), b (intermediate), and c (shortest), as follows: $\Psi = c / a$. Sphericity of a collection of resin beads is referred to herein as a number average, expressed to the second decimal place (for example, it is preferred that the number-average sphericity of the resin beads is from 0.85), and the length of the axes can be readily determined to appropriate accuracy using known equipment to analyze a microscopic image or by optical particle analyzer software.

A collection of resin beads may be characterized by the diameters of the beads. A particle that is not spherical is considered to have a diameter equal to the diameter of a sphere having the same volume as the particle. The harmonic mean diameter (HMD) is defined by the following equation:

$$\text{HMD} \;=\; \frac{N}{\sum_{i=1}^{N}\left(\frac{1}{d_i}\right)}$$

where i is an index over the individual beads; $d_i$ is the diameter of each individual particle; and N is the total number of beads. Particle sizes and particle size distributions are determined by a particle size analyzer, ideally an optical particle size analyzer, in which resin beads are circulated in water by a pump while pictures of particles are taken. Sizes of the resin beads are then measured based on particle images. Ideally, the particle size analyzer should be capable of resolving HMD to at least $\pm 1 \ \mu m$.

An example of an appropriate particle size analyzer for determining HMD and sphericity of a collection of beads is a RapidVUE 5X Particle Shape Analyzer, with RapidVUE software, PIN 6605587, and 1-mm flow cell, available from Beckman Coulter Particle Characterization. The Rapid VUE 5X Particle Shape Analyzer is calibrated with Duke Standard beads and has a resolution of $\pm 1 \ \mu m$

Microorganisms are single-celled organisms, some of which exist as individual cells or as a colony of cells. Included are bacteria, protozoa, and archaea. Some fungi, and algae are microorganisms.

Ratios presented herein are characterized as follows. For example, if a ratio is said to be 3:1 or greater, that ratio may be 3:1 or 5:1 or 100:1 but may not be 2:1. This characterization may be stated in general terms as follows. When a ratio is said herein to be X:1 or greater, it is meant that the ratio is Y: 1, where Y is greater than or equal to X. For another example, if a ratio is said to be 15:1 or less, that ratio may be 15:1 or 10:1 or 0.1:1 but may not be 20:1. In general terms, when a ratio is said herein to be W:1 or less, it is meant that the ratio is Z: 1, where Z is less than or equal to W.

The term "direction of flow" herein refers to net direction of flow of the feed water, the chemical treatment stream or the block water stream as the context may be. "Upstream" and "downstream", "upflow" and "downflow" are to be construed in the context of the net direction of flow of the feed water.

The term "partial section" of the resin bead bed herein refers to a partial section of the resin bead bed having a volume which is less than 100% of the resin bead bed. Similarly, the term "partial section" of the bead stratum herein refers to a partial section of the bead stratum having a volume which is less than 100% of the bead stratum.

The present invention involves the use of a biostratum. A biostratum is a layer of resin beads on which a biomass comprising living microorganisms grows. The resin beads on which the biomass grows and forms the biostratum are referred to herein as "biostratum carrier beads". A biostratum forms when impure feed water flows through a bed of resin beads that are contained in a vessel. Growth of microorganisms begins in between the resin beads in the region nearest the feed water inlet to the vessel. As growth of the microorganisms continues, the length of the biostratum, as measured in the net direction of feed water flow, also grows.

The microorganisms create a biomass that comprises the cells of the microorganisms and extracellular polymeric substances (EPS) created by the microorganisms. The proportion of EPS in the biomass varies. In a typical biomass EPS may be 75% or more of the biomass by volume, or 85% or more; or 95% or more.

It is considered that, as the biostratum grows, the microorganisms and the EPS fill some of the void spaces between biostratum carrier beads, thereby increasing the packing density. It is contemplated that as microorganisms continue to grow, the biostratum continues to grow, and the packing density continues to increase. As these voids become filled, the biostratum begins to block the passage of smaller and smaller particles, leading to more and more effective blocking of bacteria. Thus, the biostratum both promotes its own growth and prevents downstream biofouling by trapping bacteria from the feed water in the biostratum.

Growth of the biostratum is a natural, self-determining, process. Microorganisms grow both along the resin bed in the direction of net feed water flow and in available void spaces (i.e., increasing biostratum length and packing density, respectively). Factors determining whether growth increases biostratum length or packing density include, for example, availability of space, availability of nutrients in surrounding water, availability of light, and availability of oxygen.

The existence of the biostratum may be detected by detecting the presence of microorganisms, most conveniently by visual methods. When the vessel is transparent, or has a window, microorganisms may be conveniently detected visually as a region in which opaque white material is visible between the resin beads during operation. It can then be reasonably deduced that a biostratum also exists in a non-transparent vessel operating under similar conditions. Another convenient visual method to detect a biostratum comprises taking a sample of beads and examining them in an optical microscope. Material characteristic of microorganisms and the resulting EPS in the interstices between the resin beads will be visible in the optical microscope. Microorganism growth may be monitored by analyzing for the presence of adenosine triphosphate; by culturing material from the suspected biostratum and counting colonies; by analyzing for total organic carbon (TOC); by analyzing for nitrogen; by analyzing for carbohydrates and/or proteins. Also, the pressure drop of the feed water passing through the vessel may be monitored. As microorganisms grow, the pressure drop becomes larger. It is contemplated that during normal operation of the method of the present invention, formation of the biostratum would be monitored by measuring the pressure drop. Other means for measuring the biomass include measure of dissolved oxygen consumption by the biomass or consumption of other nutrients than phosphates, e.g., nitrogen, carbon; and measuring bio-assimilable carbon and biological oxygen demand (BOD).

It is useful to characterize the preferred intrinsic properties of the resin beads; that is properties of the resin beads before they are put to use in the method claimed.

The resin beads for use in the present invention comprise one or more polymers, preferably selected from vinyl polymers, acrylic polymers, or vinyl aromatic polymers as hereinbefore defined, or may be an acrylic resin as described in WO 2017/048748 (referred to therein as "B2").

Preferably the resin beads comprise a crosslinked polymer. Preferably, the polymer comprises polymerized units of multifunctional vinyl aromatic monomer (i.e., having two or more polymerizable carbon-carbon double bonds per molecule) in an amount, by weight based on the weight of polymer, of 0.5% or more; more preferably 1% or more. Preferably the polymer comprises polymerized units of multifunctional vinyl aromatic monomer in as amount, by weight based on the weight of polymer, of 10% or less; more preferably 8% or less; most preferably 6% or less. The preferred content range of polymerized units of multifunctional vinyl aromatic monomer is, by weight based on the weight of polymer, from 0.5% to 10%; more preferably from 1% to 8%, most preferably from 1% to 6%. The preferred multifunctional vinyl aromatic monomer is divinylbenzene.

The resin beads for use in the present invention most preferably comprise one or more polymers selected from crosslinked vinyl polymers, crosslinked acrylic polymers, or crosslinked vinyl aromatic polymers as hereinbefore defined, or may be a crosslinked acrylic resin "B2" as described in WO 2017/048748.

Another intrinsic property of the resin beads is the bead density, which can be expressed as the specific gravity of an individual bead relative to water at 4 °C. Preferably the resin beads have bead density of 1.04 or greater; more preferably 1.10 or greater; still more preferably 1.12 or greater; most preferably from 1.15 or greater; preferably no more than 3.00, more preferably no more than 2.00; more preferably no more than 1.70; most preferably no more than 1.5. Particularly preferably, the resin beads have a bead density of from 1.04 to 3.00; preferably from 1.10 to 2.00; more preferably from 1.12 to 1.70; most preferably from 1.15 to 1.50.

Preferably the collection of resin beads has harmonic mean diameter of 200 micrometers or larger; more preferably 300 micrometers or larger; more preferably 400 micrometers or larger. Preferably the collection of resin beads has harmonic mean diameter of 2,000 micrometers or smaller; more preferably 1,500 micrometers or smaller; more preferably 1,000 micrometers or smaller. Particularly preferably, the collection of resin beads has harmonic mean diameter of from 300 to 1,500 micrometers; more preferably of from 400 to 1,000 micrometers.

Preferably the collection of resin beads has number-average sphericity of from 0.85 to 1.00; preferably from 0.90 to 1.00, more preferably from 0.95 to 1.00, and most preferably from 0.98 to 1.00.

Resin beads may comprise typical functional groups used for ion exchange or may be unfunctionalized copolymer or "adsorbent" resins.

The resin beads may contain particles of hydrated ferric oxide (HFO), which may be located inside the resin beads or on the surface of the resin beads. The HFO particles preferably have average diameter of less than 500 nm. Preferably the amount of HFO, by weight based on the total weight of the resin beads, including the HFO, is 5% or more; more preferably 10% or more. Preferably the amount of HFO, by weight based on the weight of the resin beads (including the HFO) is 40% or less; more preferably 30% or less. The preferred range of HFO content, by weight based on the total weight of the resin beads, including the HFO, is from 5% to 40%; more preferably from 10% to 30%.

The resin bead bed may comprise only one type of resin bead, or may comprise more than one type of resin bead. The bead stratum may comprise one type of resin bead only, or it may comprise more than one type of beads. The biostratum carrier beads may be the same or different to beads in the bead stratum. Preferably, the biostratum carrier beads do not comprise HFO. Preferably, the beads in the bead stratum comprise HFO as discussed above.

Feed water enters the vessel, passes through the biostratum, then, in the same vessel, passes through a collection of resin beads (known herein as the "bead stratum") that has little or no microorganism or EPS content.

The amount of microorganism may be characterized as the weight of microorganism per cubic centimeter, and preferably the ratio of the average amount of microorganism in the bead stratum to the average amount of microorganism in the biostratum is 0.1:1 or less; more preferably 0.03:1 or less; more preferably 0.01:1 or less. The average amount of microorganism in the bead stratum or biostratum may be found by measuring the weight of microorganism in at least 5 samples containing in total at least 10% of the volume of bead stratum or biostratum present in the bed, and dividing by the number of samples. The samples of bead stratum should be taken at least 20 cm below the bed surface, and the samples of biostratum should be taken no more than 2 cm below the bed surface.

The "length" of the biostratum is considered to be the dimension of the biostratum in the direction of net flow of the water. Typically, the length of the biostratum L is 20cm or less, preferably 10 cm or less, preferably 5 cm or less, preferably 2 cm or less. A minimum thickness is 0.2 cm. Most preferably, the length of the biostratum is from 2 to 10 cm.

Preferably, the resin bed length is from 40 cm to 2 m; preferably at least 50 cm, preferably at least 60 cm, preferably at least 70 cm; preferably no more than 1.5 m, preferably no more than 1 m, preferably no more than 90 cm. Most preferably, the resin bed length is from 70 cm to 90 cm.

The cross section of the vessel is the section taken perpendicular to the direction of net flow of water through the vessel. Preferably, the portion of the vessel where resin beads are present has a uniform cross section. Preferably, the cross section of the vessel is circular.

Feed water enters the vessel through a first port and is typically distributed across the cross-section of the resin bed by a first distributor located between the first port and the resin bed, that allows the passage of water (i.e., is a "distributor" of water) but does not allow the resin beads to escape the vessel (i.e., is also a "barrier").

Preferably, the vessel is vertically oriented such that the first port is at the top of the vessel (i.e., is a top port), and the second port is at the bottom of the vessel (i.e., is a bottom port), such that feed water flows into the top of the vessel through a top port and bead-treated water flows out of the bottom of the vessel through a bottom port. In such a vertically orientated arrangement, the first distributor is typically located above the resin bed, in which case it may be conveniently referred to as the top distributor. The first (or "top") distributor is typically protected by a floating inert material of known design which sits between the first barrier/distributor and the biostratum. The feed water passes through the biostratum and is then labeled herein as "biostratum-treated" water.

Various preferred characteristics of the biostratum are determined as follows. Units are shown in parentheses.

$$Dp \quad = \text{harmonic mean diameter of the collection of beads} \quad (m)$$

$$Vb \quad = \text{volume of a single bead} = (4/3)(\pi)(D_p/2)^3 \quad (\text{cubic meter, or } m^3);$$

$$Sb \quad = \text{surface area of a single bead} = 4(\pi)(D_p/2)^2 \quad (\text{square meter, or } m^2);$$

$$NPCM \;=\; \text{number of beads per cubic meter} = (1\text{-}\varepsilon)\,/Vb \quad (m^{-3});$$

$$Av \quad = \text{area of the cross section of the interior volume of the vessel} \quad (m^2)$$

$$As \quad = \text{area of the cross section of the biostratum} = Av \text{ in the biostratum} \quad (m^2);$$

$$Vs \quad = \text{volume of the biostratum} = Av * L \quad (m^3);$$

$$SBV \quad = \text{volume of the biostratum occupied by beads} = Vs * Vb * NPCM \quad (m^3);$$

$$Stot \quad = \text{The total surface area of the beads in the biostratum} = NPCM * Vs * Sb \quad (m^2);$$

$$FVV \quad = \text{The free void volume in the biostratum} = Vs - SBV \quad (m^3);$$

$$L \quad = \text{Length of the biostratum} \quad (m)$$

The biostratum may be characterized by the total free void volume. It is useful to normalize the total free void volume by dividing by the area of the cross section of the biostratum, to obtain the area-normalized free void volume (ANFVV) as follows:

$$ANFVV \;=\; FVV \,/\, As \quad (m^3/m^2).$$

The area-normalized free void volume (ANFVV) is preferably less than or equal to 0.018 $m^3/m^2$; more preferably less than or equal to 0.015 m³/m². ANFVV is preferably greater than or equal to 0.001 m³/m²; more preferably greater than or equal to 0.002 m³/m². ANFVV is particularly preferably from 0.001 to 0.018 m³/m², most preferably from 0.002 to 0.015 m³/m².

The biostratum may be characterized by the packing density (PD), which is defined by the equation PD = 1 - ε, wherein ε is void fraction. PD is determined by measuring pressure drop (dP) across the biostratum to calculate void fraction (ε) using the well-known Carmen-Kozeny equation. Pressure drop (dP) across the biostratum is measured at 25°C by flowing water through the biostratum and measuring the pressure drop in the water across the length L of the biostratum. The Carman-Kozeny equation, as follows, can then be solved for ε using computer modelling:

$$\frac{dP}{L} = \frac{150\mu}{\Psi^2 D_p^2} \frac{(1-\varepsilon)^2}{\varepsilon^3} v$$

where dP is the pressure drop across the biostratum (Pa); L is the length of the biostratum (meters); μ is the viscosity of water at 25°C (0.000897 Pa*s); v is the velocity of the water (meter/s), Dp, as defined above, is the harmonic mean diameter of the collection of beads (meters), and Ψ is the sphericity of the beads, assumed here to be Ψ=1.

Measurement of dP/L may be made as follows. L is the length of the biostratum, which may be observed as described above and measured directly. To measure dP, one method is to measure the pressure drop (ΔPi) across the entire vessel containing resin beads, prior to any growth of microorganisms, at a specific velocity v of water passing through the vessel. Then, after growth of microorganisms has taken place, the pressure drop (ΔP1) is measured across the entire vessel while water is passing through at the same velocity v. Then dP = ΔP1 - Δpi.

Packing density (PD, = 1 - ε) of the biostratum increases over time as biomass grows on the resin beads, and void fraction (ε) decreases as spaces between the resin beds become progressively filled with biomass as water is treated. Preferably, packing density is 0.68 or higher; preferably 0.70 or higher; more preferably 0.74 or higher. Preferably, packing density is 0.98 or lower; preferably 0.96 or lower; more preferably 0.95 or lower; more preferably 0.94 or lower. The maximum theoretical packing density of the resin bead media is 0.64, assumptions for which include that the resin beads are close packed, spherical, have the same diameter, are completely clean and have no biomass attached. The preferred packing density at which a biostratum provides the treatment of feed water is 0.68 to 0.98. The lowest packing density value of 0.68 in that range is slightly above the 0.64 maximum theoretical packing density of the media without biomass present, indicating that a biostratum has grown. The maximum packing density value of 0.98 is the maximum at which water can still percolate through the biostratum. After a backwash process is used to physically remove the biostratum, packing density will return to the lower end of the range. The preferred range of packing density for industrial scale operation of the pretreatment method for use with the present invention for chemical treatment is particularly preferably from 0.68 to 0.96, most preferably from 0.74 to 0.94.

Another preferred characteristic of the biostratum is the ratio ("RSV") of the exterior surface area of the resin beads to the total free void volume in the biostratum:

$$RSV = Stot / FVV$$

RSV is preferably 2 m²/L or higher; more preferably 5 m²/L or higher; most preferably 10 m²/L or higher. RSV is preferably 50 m²/L or lower; more preferably 40 m²/L or lower; most preferably 30 m²/L or lower. RSV is preferably from 2 m²/L to 50 m²/L, more preferably 5 m²/L to 40 m²/L, most preferably from 10 m²/L to 30 m²/L. RSV is first calculated using quantities having all the units listed above for the individual quantities, resulting in RSV in units of m²/m³, which is then converted to m²/L for convenience.

A preferred characteristic of the method of the present invention is the flow rate (FR) of feed water through the biostratum. This flow rate is characterized as biostratum volumes per hour (Vs/h). The flow rate is 100 Vs/h or higher; preferably 120 Vs/h or higher. The flow rate is 1,000 Vs/H or lower; more preferably 750 Vs/h or lower. The flow rate is preferably from 100 Vs/h to 1000 Vs/h; more preferably 100 to 750 Vs/h; most preferably 120 Vs/h to 750 Vs/h.

Another preferred characteristic of the method of treating feed water is the Reynolds number (Re) of the feed water flow through the biostratum. The FVVL is determined using the following parameters:

$$TVS = total\ void\ surface\ area = As * (1-\varepsilon)\ (m^2);$$

$$FR = volumetric\ flow\ rate = (flow\ rate\ in\ Vs/h)\ (m^3/h);$$

$$FVVL = \text{free void velocity} = FR / TVS \quad (m/h)$$

$$\rho = \text{density of water at } 25°C = 998.2 \text{ kg/m}^3$$

$$\mu = \text{viscosity of water at } 25°C = 0.000897 \text{ Pa}*s$$

$$Dv = [(0.1547)*Dp] = [\text{ diameter of a theoretical circle that fits into the interstitial area bounded by three close-packed circles of diameter Dp in a plane }] \quad (m)$$

Then the Reynolds number (Re) is determined as follows:

$$Re = FVVL * Dv * \rho / \mu$$

The Reynolds number is preferably 0.10 or higher; more preferably 0.20 or higher; most preferably 0.30 or higher. The Reynolds number is preferably 3.0 or lower; more preferably 2.0 or lower; more preferably 1.5 or lower; more preferably 1.1 or lower. The Reynolds number is preferably from 0.1 to 3.0, more preferably from 0.20 to 2.0, most preferably from 0.3 to 1.1.

After the biostratum-treated water departs from the biostratum, it preferably immediately enters a bead stratum in the same vessel. After the water passes through the bead stratum, it is labeled herein as "bead-treated" water.

The bead-treated water leaves the vessel through a second port at a second end of the vessel, preferably having been passed through a plate that allows the passage of water through the second port but does not allow the resin beads to escape the vessel. The second port and the plate are typically located at the bottom of the vessel, in which case they may be conveniently respectively referred to as the bottom outlet and bottom plate.

Preferably, each intermediate conduit is located in the bead stratum, i.e., at a distance from, or below, the top of the resin bed ("conduit depth") which is no higher than the bottom of the biostratum. Preferably, conduit depth is at least 10 cm below the top of the resin bed, preferably at least 15 cm; preferably no more than 100 cm, preferably no more than 75 cm, preferably no more than 50 cm. Preferably, the bed length is from 70 cm to 90 cm and the conduit depth is from 5 to 55 cm; preferably at least 8 cm, preferably at least 12 cm; preferably no more than 50 cm, preferably no more than 45 cm, preferably no more than 40 cm, most preferably from 8 to 50 cm, particularly preferably from 8 to 40 cm.

The intermediate conduit(s) are of known design and preferably comprise horizontal laterals containing wedge wire pipes or nozzles with horizontal or vertical alignment (e.g., nozzles similar to KSH ADSP or AKSP) or a star shaped system (e.g., KSH series SD, SK, SS, SO), capable of delivering an aqueous chemical stream or a block water stream to the resin bed, or collecting an aqueous chemical stream and a block water stream from the resin bed, or have dual functionality and is capable of both delivering and collecting an aqueous chemical stream and/or a block water stream to or from the resin bed. Preferably, the openings in the intermediate conduit(s) have diameters from 0.05 to 2 mm, preferably 0.1 to 0.5 mm. Preferably, the intermediate conduit(s) comprise openings which are distributed in a manner that produces a substantially uniform flow over the entire cross-section of the bed and/or collects a substantially uniform amount of aqueous liquid from the entire cross-section of the bed. Preferably, the intermediate conduit(s) are symmetric in shape, i.e., having at least one plane of symmetry perpendicular to the cross-section. If a "star" conduit is used, preferably it comprises from three to eight pipes radiating from the center, preferably five or six. Conduits comprising parallel pipes preferably have from three to eight pipes, preferably four to six.

Preferably, each intermediate conduit has dual functionality such that it is capable of distributing a chemical treatment stream or a block water stream into the bed, and is capable of collecting a chemical treatment stream and a block water stream from the bed, as desired by the operator of the claimed method. Such dual functionality could preferably be provided by connecting the intermediate conduit to a device which can inject a chemical treatment stream or a block water stream through the conduit into the resin bed, or to a device which can provide suction through the conduit to collect a chemical treatment stream and a block water stream from the resin bed, the choice of functionality being chosen by the operator as desired.

The vessel preferably comprises one intermediate conduit, but may comprise multiple intermediate conduits, appropriately placed to provide chemical treatment to partial sections of the vessel as desired.

Preferably, the vessel contains a floating inert material of known design in the form of amorphous particles which float at the top of the vessel between the first (or "top") distributor and the biostratum, preferably floating on top of a freeboard. The floating inert material provides protection to the top barrier and facilitates passage of microorganisms, EPS, and any other materials other than resin beads which may be evacuated from time to time, for example in a backwash or other cleaning process.

Preferably, the length (parallel to flow) of the floating inert material in the vessel below the lowest point of the first ("top") distributor is from 100 to 500 mm, preferably from 150 to 300 mm.

Preferably the vessel is also equipped with a freeboard, which is empty of media, to accommodate expansion of the resin bead bed during backwashing. The freeboard volume may have a volume up to 100% of the volume of the bed.

The bead-treated water is conveyed to an apparatus that performs a reverse osmosis (RO) treatment on the bead-treated water. It is contemplated that the bead-treated water will have a reduced tendency to cause biofouling on the RO membrane, as microorganisms in the feed water will congregate in the biostratum and not be deposited on the downstream RO apparatus. It is further contemplated that growth of microorganisms in the biostratum will remove potential nutrients, such as phosphorous-containing anions, from the feed water, thus depriving any microorganisms located on the downstream apparatus from obtaining nutrients needed for growth. Phosphorous-containing anions are most usually ortho phosphates; phosphorous-containing anions are referred to herein as "phosphates" for convenience. Additionally, it is contemplated that the resin beads may remove phosphates from the feed water, thus removing nutrient from the feed water, thus discouraging growth of microorganisms in downstream apparatus. It is contemplated that resins that contain hydrated ferric oxide (HFO) will be especially effective at removal of phosphates. The combination of the biostratum and a HFO-containing resin in the bead stratum is considered to be especially effective, and therefore preferred, because it is contemplated that the biostratum will remove most of the phosphates and most of the other assimilable nutrients, and then the HFO-containing resin in the bead stratum will remove the rest, thus effectively preventing growth of microorganisms in the downstream RO apparatus. Preferably, the HFO-containing resin removes sufficient phosphates that the bead-treated water contains 0 to 8 parts per billion by weight (ppb) of phosphates.

A schematic embodiment of a preferred embodiment of the present invention is shown in Figure 1, which is not to scale and is not to be assumed as such.

Figure 1 shows a vertical cross section of a water-filled vessel **2** that contains resin beads in a resin bed, the resin bed comprising biostratum **1** and bead stratum **6**. The horizontal cross section of the vessel is circular. Water enters the vessel **2** through a top inlet **3,** passes through a top distributor **4,** through the floating inert material **10,** through freeboard **8,** then passes through the biostratum **1,** becoming biostratum-treated water. The biostratum-treated water then passes through the bead stratum **6,** becoming bead-treated water. Bead-treated water leaves the bead stratum through bottom plate **7** and leaves the vessel **2** through bottom outlet **5**.

The vessel **2** is equipped with an intermediate conduit **11** located within the bed, for conveying an aqueous chemical and/or block water into the resin bed or from the resin bed. In the arrangement shown in the figure, the intermediate conduit **11** is located in the upper part of the bead stratum **6,** below but close to the bottom of the biostratum **1**. The intermediate conduit **11** is provided with a port **13,** which is either an inlet port connected to a supply of an aqueous chemical or block water under pressure such that a stream of aqueous chemical or block water can be delivered into the resin bed through the intermediate conduit, or is an outlet port such that a stream of aqueous chemical and block water can be collected from the resin bed through the intermediate conduit. Preferably the intermediate conduit **11** is provided with both inlet and outlet means, such that it can deliver a stream of aqueous chemical or block water to the bed or can collect a stream of aqueous chemical and block water from the bed.

After performing the method for treating feed for some time, biomass in the biostratum will have grown undesirably large, such that the method no longer operates efficiently, and a backwash is required to remove the excess biomass from the vessel. This may be when the biostratum is so large that the packing density of the biostratum is approaching 1.00 (such that gaps between the resin beads are nearly filled with biomass and feed water can no longer efficiently pass through the biostratum). It is known from WO 2019/212720 to carry out a backwash of the entire resin bed by injecting water or other backwash medium under pressure through a bottom inlet **9,** which passes through vessel **2** in upflow, the direction opposite to the net direction taken by the feed water. That is, the backwash medium passes through the resin bed (through bead stratum **6,** then through biostratum **1**), then exits the vessel through the top distributor acting as an outlet port **12**. WO 2022/203760 discloses that a backwash of the partial section of the resin bed which lies above the intermediate distributor may be carried out by injecting water or other backwash medium under pressure through the intermediate distributor. The backwash medium passes through the part of the resin bed which lies above the intermediate distributor, then exits the vessel through a top distributor outlet port. In a preferred embodiment, as the backwash solution moves through the biostratum, the resin beads tend to sink, while the microorganisms and the EPS tend to float, and removal of the microorganisms and of the EPS proceeds more efficiently when the resin beads have higher bead density than that of water.

Top distributor **4** allows passage of the backwash solution as well as passage of microorganisms, EPS, and any other materials other than resin beads that had been in the biostratum. The floating inert material **10** provides protection to top distributor **7** and facilitate passage of microorganisms, EPS, and any other materials other than resin beads that had been in the biostratum to be evacuated with the waste backwash stream through top distributor outlet port **12**.

Backwashing removes excess microorganisms and EPS growing in the voids between the resin beads. Preferably, the backwash process removes 50% or more by weight of the microorganisms and 50% or more by weight of the EPS growing in the voids between the resin beads, based on the total weights of microorganisms and EPS respectively growing in the voids between the resin beads. More preferably, the backwash process removes 90% or more by weight of the microorganisms and 90% or more by weight of the EPS, based on the total weights of microorganisms and EPS respectively. Preferably the height of the bed is expanded by at least 40% in the backwash process, preferably at least 80%; preferably no more than 200%, preferably no more than 100%.

A significant issue involving conventional backwashing is that the entire column is shut down for cleaning and maintenance after each filtration cycle. An entire shutdown generally takes about one hour before normal operation can be resumed, and further time for regrowth of microorganisms in the biostratum. The need to backwash depends on the growth rate of the microorganisms and may be as frequent as every 1-3 days or every 1-3 months. Any disruption to water supply output is costly and inconvenient.

The present invention allows for more selective chemical treatment of the resin beads, whether in a partial section of the vessel which is upstream of an intermediate conduit (which preferably comprises the biostratum), or in a partial section of the vessel which is downstream of the intermediate conduit (which preferably comprises the bead stratum or a partial section of the bead stratum, and which preferably does not comprise the biostratum), in the direction of net flow of the feed water. Selective chemical treatment can be carried out more quickly and effectively than chemical treatment of the entire vessel. Additionally, a chemical treatment using the method of the invention can be carried out with minimal impact on biostratum activity, so that operation of the feed water treatment can be restarted quickly.

Chemical treatment of the bead stratum is desirable from time to time, for example, to remove any contaminants depending on their nature, for example, to remove any scale and metal using acid, to remove organic foulants with brine / NaCl or oxidants, or to remove migrations of biomass below the biostratum, and to regenerate beads, for example to regenerate HFO-containing beads to restore their phosphate capacity.

Chemical treatment of the biostratum is desirable from time to time, for example, treatment with acid to dissolve any scale or metal contaminants. Notably, acid dissolves HFO in HFO-containing beads, so treatment with acid is not suitable for removing any scale or metal contaminants from a bead stratum containing HFO-containing beads. Thus, when treating a biostratum with acid, care must be taken to avoid the acid contacting any HFO-containing beads in the bead stratum, which is possible using the intermediate conduit provided in the method of the present invention. The biostratum can be cleaned with a high pH caustic solution or an oxidant as described below.

The preferred chemicals present in the chemical treatment are selected for their treatment effect on the bead stratum or the biostratum, discussed below in general and summarized in Table 1 below.

Chemical treatment of the biostratum or the bead stratum is preferably carried out using the following aqueous chemicals, or a combination thereof:

- Alkali metal hydroxide having pH greater than 9, and preferably pH greater than 13, for example, lye, sodium hydroxide, potassium hydroxide, or ammonium hydroxide, preferably sodium hydroxide. Concentration is preferably in the range of 0.5-5%;
- Acid having pH < 5.5, for example, sulfuric acid, hydrochloric acid, citric acid or oxalic acid, preferably hydrochloric acid;
- Brine, or sodium chloride solution, at a concentration of 8-23 wt% in water;
- Non-oxidizing biocide having redox potential less than 400mV, for example 2,2-dibromo-3-nitrilopropionamide (DBNPA).
- Oxidant having redox potential above 400mV, for example sodium hypochlorite;

References to concentrations and other characteristics of the aqueous chemicals refer to the temperature at which the methods of chemical treatment take place, for example 5-45°C, more ideally 15-40°C, and more preferably 19-35°C. An appropriate probe may be used to determine pH or redox potential.

Treatment with an aqueous stream of alkali metal hydroxide as defined above provides surface cleaning of the beads; dissolves and flushes out any organic foulants (e.g., EPS and any other organic foulants) and microorganisms; and restores the phosphate capacity of any HFO-containing beads, which may for example be present in the bead stratum.

Treatment with an aqueous stream of acid as defined above dissolves any scale and metal (including the dissolution of HFO in any HFO-containing beads), and kills microorganisms but does not remove them.

Treatment with an aqueous stream of brine or sodium chloride as defined above removes (i.e., physically detaches) organic foulants from the surface of the beads (e.g., EPS and any other organic foulants), which are flushed out by the stream, and kills microorganisms but does not remove them.

Treatment with an aqueous stream of non-oxidizing biocide as defined above kills microorganisms but does not remove them. A non-oxidizing biocide avoids affecting the properties of the RO membrane (for example by oxidizing polyamide in the membrane).

Treatment with an aqueous stream of oxidant as defined above dissolves and flushes out any organic foulants (e.g., EPS and any other organic foulants) and microorganisms. Treatment with oxidant requires additional quenching or inactivation of any free oxidant to avoid the oxidant reaching the RO.

Table 1

| Chemical | Use or Effect in Bead Stratum | Use or Effect in Biostratum |
|---|---|---|
| Alkali metal hydroxide having pH >9 | Surface cleaning of beads, including dissolving any organic foulants and dissolving undesired microorganisms; restores phosphate capacity of HFO-containing beads (removes phosphate from HFO-complex) | Dissolves organic foulants and microorganisms |
| Acid having pH < 5.5 | Dissolves any scale and metal (including dissolving HFO in HFO-containing beads); kills undesired microorganisms but does not remove them | Dissolves any scale and metal; kills microorganisms but does not remove them |
| Brine or NaCl, 8-23% wt. in water | Removes undesired organic foulants from beads; kills undesired microorganisms but does not remove them | Removes organic foulants from beads; kills microorganisms but does not remove them |
| Non-oxidizing biocide, <400 mV redox | Kills undesired microorganisms but does not remove them | Kills microorganisms but does not remove them |
| Oxidant, >400 mV redox | Dissolves organic foulants and undesired microorganisms | Dissolves organic foulants and microorganisms |

The effect of the chemicals on the bead stratum and biostratum are similar. However, as is indicated in Table 1, whereas removal of microorganisms from the bead stratum is desirable, removal of microorganisms from the biostratum is not necessarily desirable, because microorganisms in the biostratum provide the pretreatment of feed water. Microorganisms should be removed from the biostratum when it is no longer functioning appropriately, for example, when packing density of the biostratum is too high for water to percolate through it.

One particular benefit of the present method is that the bead stratum can be treated in upflow or in downflow without affecting biostratum viability, for example using processes A1 and A2 hereinbefore described.

Preferably, in the present method, the bead stratum, or a partial section thereof, is treated with an alkali metal hydroxide having pH > 9, an acid having pH < 5.5, brine or sodium chloride having a concentration of 8-23% wt. in water, a non-oxidizing biocide having <400 mV redox, an oxidant having >400 mV redox, or a combination thereof; more preferably an alkali metal hydroxide having pH > 9, brine or sodium chloride having a concentration of 8-23% wt. in water, a non-oxidizing biocide having <400 mV redox, or a combination thereof, most preferably an alkali metal hydroxide having pH > 9.

Preferably, in the present method, the biostratum is treated with an alkali metal hydroxide having pH > 9, an acid having pH < 5.5, an oxidant having >400 mV redox, or a combination thereof.

The use of an intermediate conduit to distribute or collect high or low pH solutions, or other solutions which are toxic to the biomass (i.e., kill or dissolve biomass), before they reach the biostratum when treating the bead stratum in upflow (e.g., configuration A1), or through the intermediate distributor when treating the bead stratum in downflow (e.g., configuration A2), means that the biostratum can remain undisturbed during the chemical treatment. For example, the optimum growth rate for most bacteria, including those microorganisms which form part of the biomass, is pH 5.5-9. Even small differences in pH can disrupt the activity and metabolism of microorganisms in the biostratum and its ability to treat water. Cleaning the biostratum with a high pH caustic solution therefore has a cleaning effect on the biofilm, bacteria and organic substances captured in the biostratum.

A further example where use of an intermediate conduit is desirable to provide chemical treatment of the bead stratum without affecting biostratum viability relates to regenerating HFO-containing beads in the bead stratum. HFO-containing beads in the bead stratum adsorb phosphate nutrients remaining in the feed water after it has passed through the biostratum; removal of phosphate nutrients from the feed water discourages growth of microorganisms in the bead stratum and in the downstream RO apparatus. Once the phosphate capacity of the HFO-containing beads has been exhausted or is insufficient to treat water, the beads need to be regenerated by removal of phosphate.

A particular economic and environmental benefit of the invention is that phosphate can be removed from HFO-containing beads and recycled from an exit stream of aqueous chemical treatment comprising phosphate. This is of great benefit because it avoids phosphorus entering a receiving water system (for example, a lake, or the sea).

Although the invention has been illustrated by the use of one intermediate conduit, the vessel may comprise more than one intermediate conduit. Multiple conduits may enable provision of chemical treatment to smaller partial sections of the resin bed, thus fine-tuning areas to be treated or fine-tuning specific chemicals for different areas. For example, chemical treatment with an alkali metal hydroxide having pH > 9 could be carried out using an intermediate collector located immediately downstream of (in a vertical configuration, immediately below) the biostratum, and an intermediate distributor located below the intermediate collector and in the middle of the bead stratum , could be used to regenerate HFO beads in a partial section of bead stratum near the biostratum, where the HFO beads have the highest phosphate concentration, without treating HFO beads in a partial section of bead stratum further from the biostratum, which have lower phosphate concentration. This would result in particularly high concentrations of phosphate in the aqueous solution exiting the vessel. This provides technical and economic benefits, including in processing (i.e., extracting phosphate from the solution for recycling) and handling (including transportation and storage).

Examples

The following examples, derived from modelling, illustrate the present invention.

A cylindrical vessel as shown in Figure 1 was used, with vertical orientation, and having an internal radius of 2 m. The vessel was filled with resin beads, assumed to have number-average sphericity of 1.0 and an HMD of 0.70 mm (700 $\mu$m), to form a bed of resin beads having a bed height of 0.8 m. The clean media was assumed to be close packed, having an initial packing density of 0.64. The particular polymeric composition of the resin beads is not relevant for the simulations which were run but was assumed to be suitable for the method, for example having a polymeric composition described as preferred above.

The vessel was equipped with an intermediate conduit placed at a depth of 0.15 m from the top surface of the resin bead bed, and acting as a distributor or a collector, as specified in Table 2.

Impure feed water was passed through the vessel from the top inlet to the bottom outlet, establishing a biostratum having height of 0.02 m, the biostratum and feed water flow having characteristics as follows:

- area-normalized free void volume in the biostratum, ANFVV = 0.0072 $m^3/m^2$;
- packing density of the biostratum = 0.85;
- ratio of the exterior surface area of the resin beads to the total free void volume in the biostratum, RSV = 15.2 $m^2/L$;
- flow rate of feed water through the biostratum, FR = 199 Vs/h;
- Reynolds number of the feed water flow through the biostratum, Re = 0.37.

The examples were labelled A1, A2, B1 and B2 respectively, representing the configurations A1, A2, B1 and B2 described above. These examples refer to Examples A1 and A2 as treating "the bead stratum" and to Examples B1 and B2 as treating "the biostratum", for convenience.

The vessel used in Comparative Example 1 ("Comp. Ex. 1") had no intermediate conduit, and no block water. The set-up and conditions for Comparative Example 1 were in other respects the same as for examples A1, A2, B1 and B2.

A stream of an aqueous chemical treatment for treatment of the bead stratum, the biostratum, or both (entire resin bed) was introduced through the "chemical entry port", and collected from the "waste water outlet port", as identified in Table 2. The specific nature of the chemical or chemicals used was not relevant for the simulations which were run but was assumed to be suitable for each example, i.e., as generally described above. The aqueous chemical treatment stream had a flow rate of 50 $m^3$/h calculated for the vessel size, and a linear velocity of 4.0 m/h. The amount (volume) of chemical to be used for the chemical treatment is shown in Table 2, expressed in "BV", meaning a volume of chemical relative to the volume of the partial section of the resin bed being treated, i.e., whether the bead stratum, the biostratum or "both" (i.e., both bead stratum and biostratum, the entire resin bed).

Block water entered the vessel through a port as identified in Table 2, and at the velocities as shown in Table 2 (linear velocity expressed as a % of linear velocity of the chemical treatment, 4.0 m/h).

Table 2 shows the volume of block water used, and the volume of waste water (comprising block water, aqueous chemical and any waste products) produced over the contact time.

Table 2

| Configuration | Example A1 | Example A2 | Example B1 | Example B2 | Comp. Ex 1 |
|---|---|---|---|---|---|
| **Description of Conduit** | Intermediate collector | Intermediate distributor | Intermediate distributor | Intermediate collector | None |
| **Stratum being treated** | Bead stratum | Bead stratum | Biostratum | Biostratum | Both |
| **Chemical entry port** | Bottom | Intermediate | Intermediate | Top | Bottom |
| **Block water entry port** | Top | Top | Bottom | Bottom | - |

(continued)

| Configuration | Example A1 | Example A2 | Example B1 | Example B2 | Comp. Ex 1 |
|---|---|---|---|---|---|
| Waste water outlet port | Intermediate | Bottom | Top | Intermediate | Top |
| Bead / biostratum volumes of chemical treatment stream (BV) | 8.0 | 8.0 | 4.0 | 4.0 | 12.0 |
| Block water linear velocity (as % of linear velocity of chemical stream) | 1.4% | 1.5% | 0.2% | 1.5% | - |
| Block water use ($m^3$/h) | 0.7 | 0.8 | 0.1 | 0.8 | - |
| Waste water produced ($m^3$) | 67.1 | 67.2 | 7.6 | 8.0 | 120.6 |
| Savings (%) on waste water produced compared to Comp. Ex. 1 | 44% | 44% | 94% | 93% | - |
| Can chemical treatment of the bead stratum be carried out without affecting viability of biostratum? | YES | YES | N/A | N/A | NO |
| Contact time (min) | 147 | 147 | 34 | 34 | 181 |

Table 2 shows the benefits of the invention, as savings in wastewater over comparative experiments; noting whether the chemical treatment of the bead stratum can be carried out without affecting the viability of the biostratum; and showing contact time.

The results show that the invention provides for very significant reductions in wastewater over Comparative Example 1:

- treatment of the bead stratum per Examples A1 and A2 resulted in a 44% reduction in wastewater over Comparative Example 1;

- treatment of the biostratum per Examples B1 and B2 resulted in a 93 and 94% reduction in wastewater over Comparative Example 1, respectively.

These reductions show that the invention provides highly significant savings for treating the bead stratum, and extraordinary savings for treating the biostratum.

In particular, the results demonstrate that use of an intermediate conduit according to the invention enables the use of a lower-than proportional volume of chemical treatment (at a given concentration) to treat a partial volume of the resin bed than is required to treat the entire resin bed. This is because the chemical is not diluted in the other parts of the vessel, such as in the freeboard, and in between the beads. Water in the freeboard dilutes the chemical stream and requires a large amount of chemical to be injected into the vessel in downflow to be effective in the bed. Water is present between the beads in the bed, but because of the presence of the biomass in the biostratum, there is proportionally more water in the bead stratum. By using an intermediate conduit to introduce or collect the chemical treatment stream directly into the bed, the chemical stream can reach the beads with minimal dilution, increasing its effective concentration and minimizing waste volume and rinsing requirements.

A further highly significant benefit in using the invention is that the bead stratum, or a partial section thereof, can be chemically treated without affecting the viability of the biostratum.

Another notable benefit in using the invention is the significant reduction in contact time compared to Comparative Example 1.

In conclusion, the examples demonstrate that the use of an intermediate conduit according to the invention not only enables selective chemical treatment of a selected partial section of a resin bed used in a method of treating feed water, but also has benefit that the bead stratum, or a partial section thereof, can be treated without affecting the viability of the biostratum. The examples further demonstrate surprising and significant savings of time and resources, including, for example, in the amount of chemical and water required for treatment, and reduction of volume of waste to be managed. It also allows for recycling of phosphorous-containing anions as described above.

**Claims**

1. A method of chemically treating resin beads in a vessel (2),

   wherein the vessel is adapted to treat feed water, and comprises

   (a) a bed of resin beads comprising a biostratum (1) upstream of a bead stratum (6) in the net direction of feed water flow, wherein the biostratum comprises resin beads and a biomass comprising living microorganisms;
   (b) a first port (3) at a first end of the vessel, through which feed water enters the vessel;
   (c) a second port (5) at a second end of the vessel, through which bead-treated water leaves the vessel;
   (d) the first and second ends are situated at opposing ends of the vessel;
   (e) at least one intermediate conduit (11) located within the bed, for conveying an aqueous chemical into the bed and/or from the bed; and

   wherein the bead-treated water is passed through an apparatus that performs a reverse osmosis process on the bead-treated water; and
   wherein the method of chemically treating the resin beads comprises chemically treating a partial section of the resin bead bed with an aqueous chemical, the partial section having a volume which is less than 100% of the volume of the resin bead bed and being located upstream or downstream of an intermediate conduit in the net direction of feed water flow, and wherein the aqueous chemical is conveyed to the partial section of the bed and/or is conveyed from the partial section of the bed through the intermediate conduit.

2. A method according to claim 1, wherein, in the feed water treatment process,

   (a) the area-normalized free void volume (ANFVV) in the biostratum is $0.018 \, \text{m}^3/\text{m}^2$ or less, wherein ANFVV is the total free void volume divided by the area of the cross section of the biostratum;
   (b) the packing density in the biostratum is 0.68 to 0.98;
   (c) the ratio of the exterior surface area of the resin beads to the total free void volume in the biostratum is 2.0 to 50 $\text{m}^2/\text{L}$;
   (d) the flow rate of feed water through the biostratum is 100 to 1,000 biostratum volumes per hour; and
   (e) the Reynolds number of the feed water flow through the biostratum is 0.10 to 3.0.

3. A method according to any one of the preceding claims wherein the at least one intermediate conduit has dual functionality such that it is capable of delivering an aqueous chemical to the bed and is capable of collecting an aqueous chemical from the bed.

4. A method according to any one of the preceding claims wherein at least one intermediate conduit is located in the bead stratum.

5. A method according to any one of the preceding claims wherein the resin beads comprise a crosslinked polymer.

6. A method according to any one of the preceding claims wherein a stream of water, termed block water, is introduced into a second partial section of the resin bed, to prevent flow of an aqueous chemical treatment from a first partial section of the resin bed into the second partial section of the resin bed, the first and second partial sections of the resin bed being on opposite sides of an intermediate conduit,
   wherein the block water stream has a lower linear velocity than that of the chemical treatment stream.

7. A method according to claim 6 wherein said bead stratum, or a partial section thereof, is treated with an aqueous chemical which is delivered to the bead stratum in a chemical treatment stream, which method comprises the steps of:

   i. introducing said bead stratum chemical treatment stream into the vessel through said second port, wherein

   (a) the amount of bead stratum chemical treatment flowing through the bead stratum is 1 to 15 bead stratum volumes; and
   (b) the linear velocity of the bead stratum chemical treatment stream flowing through the bead stratum is 0.1 to 14 m/h;

   ii. introducing a block water stream into the vessel through said first port, wherein the block water stream has a linear velocity of from 0.2 to 50% of the linear velocity of the bead stratum chemical treatment stream; and

iii. discharging the bead stratum chemical treatment stream and the block water stream from the vessel through said intermediate conduit.

8. A method according to claim 6 wherein said bead stratum, or a partial section thereof, is treated with an aqueous chemical which is delivered to the bead stratum in a chemical treatment stream, which method comprises the steps of:

   i. introducing said bead stratum chemical treatment stream into the vessel through said intermediate conduit, wherein:

   (a) the amount of bead stratum chemical treatment flowing through the bead stratum is 1 to 15 bead stratum volumes; and
   (b) the linear velocity of the bead stratum chemical treatment stream flowing through the bead stratum is 0.1 to 14 m/h;

   ii. introducing a block water stream into the vessel through said first port, wherein the block water stream has a linear velocity of from 0.1 to 10% of the linear velocity of the bead stratum chemical treatment stream; and
   iii. discharging the bead stratum chemical treatment stream and the block water stream from the vessel through said second port.

9. A method according to claim 6 wherein said biostratum is treated with an aqueous chemical which is delivered to the biostratum in a chemical treatment stream, which method comprises the steps of:

   i. introducing said biostratum chemical treatment stream into the vessel through said intermediate conduit, wherein:

   (a) the amount of biostratum chemical treatment flowing through the biostratum is 1 to 15 biostratum volumes; and
   (b) the linear velocity of the biostratum chemical treatment stream flowing through the biostratum is 0.1 to 10 m/h;

   ii. introducing a block water stream into the vessel through said second port, wherein the block water stream has a linear velocity of from 0.1 to 10% of the linear velocity of the biostratum chemical treatment stream;
   iii. discharging the biostratum chemical treatment stream and the block water stream from the vessel through said first port.

10. A method according to claim 6 wherein said biostratum is treated with an aqueous chemical which is delivered to the biostratum in a chemical treatment stream, which method comprises the steps of:

   i. introducing said biostratum chemical treatment stream into the vessel through said first port, wherein:

   (a) the amount of biostratum chemical treatment flowing through the biostratum is 1 to 15 biostratum volumes; and
   (b) the linear velocity of the biostratum chemical treatment stream flowing through the biostratum is 0.1 to 10 m/h;

   ii. introducing a block water stream into the vessel through said second port, wherein the block water stream has a linear velocity of from 0.1 to 90% of the linear velocity of the biostratum chemical treatment stream; and
   iii. discharging the biostratum chemical treatment stream and the block water stream from the vessel through said intermediate conduit.

11. A method according to any one of the preceding claims, wherein

   chemical treatment of the bead stratum comprises use of an aqueous chemical which is an alkali metal hydroxide having pH > 9, an acid having pH < 5.5, brine or sodium chloride having a concentration of 8-23% wt. in water, a non-oxidizing biocide having <400 mV redox, an oxidant having >400 mV redox, or a combination thereof; and chemical treatment of the biostratum comprises use of an aqueous chemical which is an alkali metal hydroxide having pH > 9, an acid having pH < 5.5, an oxidant having >400 mV redox, or a combination thereof.

12. A method according to any one of claims 1 to 7, 10 or 11, wherein at least one intermediate conduit collects an aqueous chemical being discharged from the vessel.

13. A method according to any one of the preceding claims, wherein the vessel is oriented vertically, such that the first port and first end of the vessel are located at the top of the vessel, the second port and second end of the vessel are located at the bottom of the vessel, and feed water flows downwards through the resin bed from the first port.

14. A method according to any one of claims 1 to 8 or 11 to 14, wherein the chemical treatment does not affect the viability of the biostratum.

15. A method according to any one of claims 1 to 8 or 11 to 14, wherein

the bead stratum comprises resin beads comprising from 5 to 40%, by weight based on the total weight of the resin beads, of hydrated ferric oxide;
the aqueous chemical treatment stream comprises an alkali metal hydroxide having pH > 9 which extracts phosphorous-containing anions from the beads; and
wherein the method further comprises recycling phosphorous-containing anions from the chemical treatment stream after it is discharged from the vessel.

## Fig. 1

Europäisches
Patentamt

European
Patent Office

Office européen
des brevets

# EUROPEAN SEARCH REPORT

**Application Number**

EP 23 38 3071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2022/203760 A1 (DDP SPECIALTY ELECTRONIC MAT US LLC [US]) 29 September 2022 (2022-09-29) | 1-5, 11-14 | INV. C02F3/06 C02F3/10 |
| A | * figure * * paragraphs [0004], [0038] – [0045], [0047] – [0050] * ----- | 6-10,15 | ADD. C02F1/44 |

**TECHNICAL FIELDS SEARCHED (IPC)**

C02F

The present search report has been drawn up for all claims

| Place of search | Date of completion of the search | Examiner |
|---|---|---|
| The Hague | 18 March 2024 | Onel Inda, Santiago |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

**EP 23 38 3071**

This annex lists the patent family members relating to the patent documents cited in the above-mentioned European search report.
The members are as contained in the European Patent Office EDP file on
The European Patent Office is in no way liable for these particulars which are merely given for the purpose of information.

**18-03-2024**

| Patent document cited in search report | Publication date | Patent family member(s) | Publication date |
|---|---|---|---|
| WO 2022203760 A1 | 29-09-2022 | BR 112023019643 A2 | 23-01-2024 |
| | | CN 117242038 A | 15-12-2023 |
| | | EP 4313873 A1 | 07-02-2024 |
| | | JP 2024511630 A | 14-03-2024 |
| | | KR 20230160866 A | 24-11-2023 |
| | | WO 2022203760 A1 | 29-09-2022 |

EPO FORM P0459

For more details about this annex : see Official Journal of the European Patent Office, No. 12/82

**EP 4 541 775 A1**

**Patent documents cited in the description**

- WO 2019212720 A

- WO 2022203760 A
- WO 2017048748 A